(19) **Europäisches Patentamt / European Patent Office / Office européen des brevets**

(11) **EP 3 077 795 B1**

(12) **FASCICULE DE BREVET EUROPEEN**

(45) Date de publication et mention de la délivrance du brevet:
**08.01.2020 Bulletin 2020/02**

(21) Numéro de dépôt: **14803131.3**

(22) Date de dépôt: **27.11.2014**

(51) Int Cl.:
*G01M 5/00* (2006.01)    *G01N 29/07* (2006.01)
*G01N 29/24* (2006.01)    *G01N 21/17* (2006.01)
*G01M 11/08* (2006.01)    *G01N 29/06* (2006.01)
*G01D 5/353* (2006.01)

(86) Numéro de dépôt international:
**PCT/EP2014/075763**

(87) Numéro de publication internationale:
**WO 2015/082292 (11.06.2015 Gazette 2015/23)**

(54) **CONTROLE DE STRUCTURE INDUSTRIELLE**

PRÜFUNG EINER INDUSTRIESTRUKTUR

TESTING OF AN INDUSTRIAL STRUCTURE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.12.2013 FR 1361916**

(43) Date de publication de la demande:
**12.10.2016 Bulletin 2016/41**

(73) Titulaire: **Commissariat à l'Énergie Atomique et aux Énergies Alternatives 75015 Paris (FR)**

(72) Inventeur: **CHAPUIS, Bastien 78220 Viroflay (FR)**

(74) Mandataire: **Hnich-Gasri, Naïma et al Marks & Clerk France Immeuble Visium 22, avenue Aristide Briand 94117 Arcueil Cedex (FR)**

(56) Documents cités:
EP-A1- 2 549 247    EP-A2- 2 148 216
US-A1- 2008 156 971    US-B1- 6 285 806

• DUROUX ADELAIDE ET AL: "Extracting guided waves from cross-correlations of elastic diffuse fields: Applications to remote structural health monitoring", THE JOURNAL OF THE ACOUSTICAL SOCIETY OF AMERICA, AMERICAN INSTITUTE OF PHYSICS FOR THE ACOUSTICAL SOCIETY OF AMERICA, NEW YORK, NY, US, vol. 127, no. 1, 1 janvier 2010 (2010-01-01), pages 204-215, XP012135139, ISSN: 0001-4966, DOI: 10.1121/1.3257602
• KAHANDAWA GAYAN C ET AL: "Use of FBG sensors in SHM of aerospace structures", THIRD ASIA PACIFIC OPTICAL SENSORS CONFERENCE, SPIE, 1000 20TH ST. BELLINGHAM WA 98225-6705 USA, vol. 8351, no. 1, 31 janvier 2012 (2012-01-31), pages 1-10, XP060001193, DOI: 10.1117/12.916111
• Y. BOTSEV ET AL.: "Using Fiber Bragg Gratings to Measure Lamb Waves in an Anisotropic Composite Plate", PROCEEDINGS OF SPIE, 19TH INTERNATIONAL CONFERENCE ON OPTICAL FIBRE SENSORS, vol. 7004, 1 janvier 2008 (2008-01-01), pages 700445-1-700445-4, XP002728264, DOI: 10.1117/12.786055

- **TAKEDA N ET AL: "Development of smart composite structures with small-diameter fiber Bragg grating sensors for damage detection: Quantitative evaluation of delamination length in CFRP laminates using Lamb wave sensing", COMPOSITES SCIENCE AND TECHNOLOGY, ELSEVIER, UK, vol. 65, no. 15-16, 1 décembre 2005 (2005-12-01), pages 2575-2587, XP027688113, ISSN: 0266-3538 [extrait le 2005-12-01]**

## Description

### Domaine de l'invention

L'invention concerne le domaine de la métrologie et en particulier celui du contrôle de santé de structures au moyen de fibres optiques.

### Etat de la Technique

Le contrôle de l'intégrité des structures (ouvrages d'art, avions ou pipelines par exemple) au cours de leur vie se fait généralement lors d'opérations de maintenance, avec inspection et intervention humaine. Un problème technique concret consiste par exemple à détecter et dimensionner une zone corrodée sur un fuselage d'avion.

Pour ces contrôles d'intégrité, on utilise généralement des méthodes de contrôle dit non-destructif (CND), selon des méthodes dites « classiques » (par ultrasons, selon méthodes électromagnétiques, etc.).

Depuis quelques années existent des développements de recherche visant à intégrer des capteurs dans la structure en des points-clefs des structures, ceci afin d'automatiser les mesures (par exemple à intervalles réguliers, ces intervalles étant généralement rapprochés dans le temps) et de pouvoir accéder à des informations sur l'état de santé de certaines zones inaccessibles, sans démontage ni interruption du fonctionnement de la structure. En général, ces développements visent à espacer les intervalles de maintenance, et donc économiser de l'argent.

En particulier, certaines recherches prévoient l'utilisation d'ondes ultrasonores guidées (OG) émises et détectées par des transducteurs piézoélectriques (par exemple de type PZT) intégrés dans la structure. Ces ondes guidées se propagent sur une grande distance (quelques dizaines de cm à quelques centaines de mètres dans des géométries très favorables comme les pipelines), si bien qu'un nombre limité de transducteurs permet de contrôler une grande zone. D'autres technologies peuvent être utilisées pour émettre et/ou détecter les ondes ultrasonores guidées (outre les fibres optiques, des films PVDF ou des capteurs magnétostrictifs par exemple).

Un problème technique général réside dans le fait de trouver un compromis acceptable entre le nombre de capteurs à intégrer (coût, encombrement, poids, etc.) et la qualité des informations récupérables par ces capteurs. Un nombre élevé de capteurs signifie un coût élevé et un nombre faible de capteurs implique souvent un manque de fiabilité de l'information, des risques de fausses alarmes, ou encore un manque de redondance en cas de défaillance d'un capteur. La multiplication des capteurs pose cependant d'autres problèmes spécifiques (par exemple chaque capteur intégré peut constituer un point de fragilisation additionnel, qui risquerait d'induire de nouveaux défauts dans la structure). Pour chaque capteur, il faut en outre prévoir des fils d'alimentation électrique, ce qui n'est pas toujours possible. Dans la pratique industrielle, très peu d'applications fournissent un compromis satisfaisant.

Concernant la nature des capteurs, les solutions connues de l'état de la technique utilisant des lasers comme systèmes de mesure ne sont pas utilisables en toutes circonstances. En particulier, les lasers ne peuvent pas être intégrés aux structures.

Certaines approches connues consistent à procéder à une mesure de référence de la structure à l'état sain afin de constater une différence avec un état ultérieur pour révéler la présence du défaut. Afin de fiabiliser cette opération, différentes techniques de traitement des signaux existent, en particulier pour compenser l'influence de la température, mais aucune n'est réellement efficace. Dans tous les cas l'interprétation des signaux reste très délicate.

Le document de brevet US6285806 divulgue un réseau de capteurs à fibres optiques comportant plusieurs segments. Les segments sont séparés par de faibles réflecteurs tels que des réseaux de Bragg à fibres optiques. La lumière provenant d'une source de lumière est entrée à l'extrémité d'entrée du réseau. La lumière réfléchie par chacun des réflecteurs a un déphasage représentant les effets de la condition physique sur tous les segments, de l'entrée à ce réflecteur. Pour s'adresser à un réflecteur spécifique, la lumière de retour est démultiplexée. Ce démultiplexage est effectué en modulant l'entrée de lumière dans l'extrémité d'entrée du réseau avec une séquence de bits pseudo-aléatoire et en corrélant la sortie avec une version décalée dans le temps de la séquence de bits pseudo-aléatoire pour isoler la partie de la sortie causée par ce réflecteur. Pour adresser un segment spécifique, les déphasages de deux réflecteurs adjacents sont déterminés. La lumière de retour peut être renforcée en la mélangeant avec une partie de la lumière captée par la source lumineuse.

Les différents aspects de l'invention pallient à ces inconvénients, au moins en partie.

### Résumé de l'invention

Certains modes de réalisation de l'invention prévoient avantageusement l'utilisation de réseaux de Bragg, notamment de "capteurs FBG" ou "senseurs FBG" ou "points de mesure FBG", "FBG" étant l'acronyme de l'expression anglaise *"Fiber Bragg Grating"*.

Un réseau de Bragg (ou réflecteur de Bragg distribué) est un réflecteur de qualité utilisé dans des guides d'onde, par exemple dans des fibres optiques. Il s'agit d'une structure dans laquelle alternent des couches de deux matériaux d'indices de réfraction différents, ce qui provoque une variation périodique de l'indice de réfraction effectif dans le guide. Un réseau de Bragg est une modulation submicronique de l'indice de réfraction du cœur de la fibre : un réseau de quelques millimètres comporte ainsi plusieurs milliers de pas. D'un point de vue fonctionnel, il joue le rôle d'un réflecteur pour une bande spectrale fine centrée à une longueur d'onde caractéristique proportionnelle au pas et à l'indice du cœur de la fibre. Ainsi, toute modification de ces paramètres déplace proportionnellement la longueur d'onde de Bragg. Le suivi de ses déplacements spectraux permet de remonter aux paramètres inducteurs, comme la température ou les déformations subies localement par la fibre optique. Ces réseaux de Bragg sont réalisés par laser au sein du cœur de fibres monomodes. L'inscription de ces réseaux peut notamment s'effectuer par insolation transverse avec une figure d'interférences créée par deux faisceaux laser.

Selon un mode de réalisation, il est divulgué une méthode d'analyse d'une structure par corrélation de champ diffus, selon la revendication 1, une fibre optique comportant une pluralité de points de mesure, un point de mesure comportant des capteurs de type réseau de Bragg (Fiber Bragg Grating, FBG), la fibre optique étant déployée "dans" (par exemple "placée a posteriori" ou "intégrée nativement dans") ou "sur" (par exemple "posée sur" ou "attachée" ou "associée à") la structure à analyser, la méthode comprenant l'émission de lumière dans la fibre optique; et la mesure par corrélation pour au moins une partie des couples de capteurs FBG du champ acousto-élastique se propageant "dans" (ou "au sein de", "au travers de", "via") la structure. Les capteurs ou les couples de capteurs FBG sont interrogés sensiblement simultanément. Par le terme "sensiblement", il est fait référence à la vitesse des ondes élastiques et au fait que métrologiquement les interrogations interviennent dans un delta de temps (intervalles de temps rapprochés pour obtenir des mesures significatives du point de vue de la propagation des ondes élastiques dans la structure). Tout ou partie des capteurs peuvent être interrogés, suivant diverses implémentations. D'une manière non revendiquée, un sous-ensemble de capteurs peut être interrogé sensiblement simultanément, tandis qu'un autre sous-ensemble peut faire l'objet d'une interrogation retardée (par exemple de façon séquentielle ou de façon parallèle par paires ou bien encore combiner ces modes d'interrogation, par rotation, etc.). Le champ acousto-élastique désigne le champ des ondes mécaniques (sonores, ultrasonores etc.) qui se propagent dans un milieu solide. Contrairement au cas du fluide, il existe deux types d'ondes acoustiques pour un matériau solide. Ces ondes sont plus connues sous le nom d'ondes élastiques (cisaillement et compression-traction). L'effet acoustoélastique traduit une dépendance de la vitesse de propagation des ondes acoustiques en fonction de l'état de déformation du solide. La structure à analyser ne comporte pas de restrictions particulières dans la mesure où tout type de structure (en particulier industrielle) peut être analysé par les méthodes et systèmes présentement décrits.

Dans un développement, la méthode comprend en outre une étape de reconstruction des vitesses de propagation par tomographie, l'imagerie étant réalisée par l'inversion de l'ensemble des temps de vols entre les capteurs FBG, chaque temps de vol pour chaque paire de capteurs FBG étant déduit de la mesure de corrélation. Ce développement est optionnel. Il présente l'avantage d'une interprétation ultérieure améliorée.

Dans un développement, la position dans l'espace de chaque point de mesure est préalablement et individuellement mesurée. Cette solution présente l'avantage de sa simplicité de mise en œuvre.

Dans un développement, la température de la structure est mesurée et une variation de temps de vol induite par un changement de température est compensée. La température peut en effet influer sur les temps de vol et il est appréciable de pouvoir corriger ou compenser les effets thermiques. Concrètement, un thermocouple peut être utilisé mais d'autres méthodes de mesure sont possibles.

Dans un développement, l'imagerie de la structure par tomographie est effectuée par la mesure d'au moins deux temps de vol, une première mesure étant effectuée dans un état initial ou de référence et une seconde mesure étant effectuée dans un état ultérieur (pour les mêmes couples de points de mesure). L'état ultérieur est dit "actuel", il correspond donc au temps présent de la mesure ("deuxième jeu de mesure").

La réalisation d'une tomographie (entièrement optionnelle) sur les données issues de la première mesure permet en particulier d'identifier certaines particularités géométriques de la structure. Ceci correspond à une mesure statique faite dans l'état initial (ou de référence). L'imagerie de la structure au repos peut être éventuellement soustraite d'images ultérieures de la structure (soustraction de pixels, c'est-à-dire en matière de contenu de l'image). En d'autres termes, cette cartographie optionnelle permet d'identifier certaines particularités géométriques de la structure afin de ne pas les confondre avec des défauts sur les cartographies obtenues sur le deuxième jeu de mesure.

Dans un développement, la méthode comprend en outre une seconde mesure effectuée dans un état ultérieur pour les mêmes couples de points de mesure que la première mesure et comprend en outre une cartographie par tomographie des variations de vitesses de propagation dans la structure entre l'état initial et l'état ultérieur obtenue à partir des différences des temps de vols mesurés entre les deux états. En d'autres termes, il est procédé à la mesure de la variation des temps de vols (mesurés pour les couples) entre les deux états. Ceci permet d'obtenir par tomographie une cartographie des variations de vitesse de propagation des ondes élastiques (élasto-acoustiques) entre l'instant de la mesure associé à l'état actuel (présent) et l'instant associé à l'état de référence. Par exemple entre l'instant $t$ de la mesure et l'instant $t_0$ initial, on pourra constater que les ondes vont "plus lentement" (respectivement "plus vite") à certains endroits et en déduire l'identification des défauts ou des dommages occasionnés à la structure.

Dans un développement, un point de mesure comprend un capteur FBG. L'utilisation d'un capteur de ce type pour faire de la corrélation de champ diffus n'a pas été décrite a priori. Dans un autre développement, un point de mesure comprend trois capteurs FBG récepteurs et directionnels sensiblement disposés à 120° l'un de l'autre dans une configuration dite en rosette. La configuration en rosette est le compromis qui minimise le nombre d'éléments matériels tout en assurant une bonne qualité de la mesure. Un point de mesure peut également comprendre un nombre quelconque de capteurs FBG (par exemple 5 capteurs, 6 capteurs, etc.).

Dans un développement, la mesure par corrélation comprend une corrélation de coda de corrélations entre capteurs FBG. Ce développement entièrement optionnel optimise le dispositif, puisqu'il rend plus aisé la disposition de la fibre optique sur la structure. Par suite, les temps nécessaires à la mise en place peuvent être réduits, les erreurs de positionnement des points de mesure minimisés, etc. La "corrélation de coda de corrélations" consiste, pour un couple de points de mesure A et B, à choisir un point de mesure quelconque $C_i$ sélectionné parmi l'ensemble des points de mesure (sauf A et B); à corréler les mesures pour chacun des points A et B avec ce point de mesure quelconque $C_i$; à corréler la coda de ces corrélations pour obtenir la corrélation entre les points de mesure A et B. Il est possible de répéter l'opération pour une partie ou l'ensemble des points de mesure $C_i$ possibles et de sommer les corrélations obtenues pour obtenir une corrélation entre A et B avec une meilleure fiabilité. Tout ceci peut être appliqué sur tout ou partie des couples possibles de capteurs FBG.

Dans un développement, il est divulgué l'emploi d'une pluralité de fibres optiques, chacune comportant (au moins partiellement des capteurs FBG). Les implémentations en pratique peuvent varier. Chaque capteur ou couple ou paire de capteurs peut être interrogé séparément. Il est également divulgué un système pour l'analyse d'une structure, selon la revendication 11, comprenant au moins une fibre optique comportant une pluralité de points de mesure, un point de mesure comportant un ou plusieurs capteurs de type réseau de Bragg (*Fiber Bragg Grating,* FBG); une source de lumière couplée à la fibre optique; un photo-détecteur ou un analyseur de spectre optique pour analyser la lumière réfléchie après son parcours dans la fibre optique; et des moyens de traitement du signal pour effectuer des calculs de corrélation et de tomographie.

Dans un développement, la source de lumière est un laser dont on fait varier la longueur d'onde ou une source optique à large bande dont le spectre optique réfléchi est déterminé. Les lasers sont désormais courants et les mesures associées sont performantes.

Dans un développement, les fibres optiques peuvent être multiplexées au moyen, par exemple, de circulateurs optiques et/ou d'analyseurs de spectre et/ou de multiplexeurs.

Dans un développement, les capteurs unidirectionnels de type FBG sont complémentés ou remplacés par des capteurs omnidirectionnels de type (*Doppler effect-based Fiber Optic, FOD*). Les capteurs peuvent donc tous être de type FBG, ou tous de type FOD, ou bien encore la méthode peut s'implémenter sur un système comprenant les deux types de capteurs simultanément (dans des proportions variables, versus des aspects économiques et de performances).

Dans un développement, le système comprend en outre une ou plusieurs sources de bruit actives positionnées dans ou sur la structure de manière à obtenir un champ acoustoélastique diffus, c'est-à-dire respectant au mieux les caractéristiques d'un champ diffus. Dans un mode de mise en œuvre, ledit placement ou positionnement est interactivement guidé par les mesures en cours. Dans un autre mode de mise en œuvre, la localisation des sources de bruit est déterminée théoriquement (c'est-à-dire "prédéterminée"). Dans un autre mode de mise en oeuvre est retournée une indication quant à l'adéquation dudit positionnement (versus l'hypothèse de champ diffus). Dans une autre mise en œuvre, la multiplicité des points ou sources de bruit (conjugué à des placements réalisés de manière aléatoires) tend à garantir l'obtention d'un champ diffus (sans boucle retour, i.e. a priori). En d'autres termes, il est divulgué un système comprenant une ou plusieurs sources de bruit actives qui peuvent être utilisées en complément ou en remplacement des sources naturelles de bruit présentes dans la structure, ce qui peut être également avantageux pour l'étalonnage. Ces sources additionnelles peuvent être par exemple des transducteurs piézoélectriques judicieusement placés dans la structure, afin de pouvoir faire des mesures lorsque désiré (par exemple, dans un avion si les sources naturelles sont les turbulences en vol, il sera avantageusement fait usage de sources actives additionnelles pour pouvoir effectuer une mesure au sol, lorsqu'il n'y a plus de bruit « naturel » dans la structure). Ces sources seront avantageusement placées de telle sorte à créer un champ acoustique qui respecte au mieux la condition d'équi-répartition en énergie. Par exemple, pour satisfaire cette condition, les sources peuvent être placées proches de diffuseurs naturels (ou bien encore autour de la zone à contrôler). Il est possible d'utiliser des sources actives intégrées dans la structure. Il est également possible d'utiliser des sources actives qui n'y sont pas intégrées: par exemple un jet d'air comprimé dont la zone de contact balaye aléatoirement la structure à examiner (de manière à satisfaire la condition d'équi-répartition en énergie). Le système peut donc comprendre au moins une source de bruit, ladite source étant par exemple un jet d'air comprimé dont la zone de contact balaye aléatoirement la structure.

Dans un développement, une source de bruit active peut être un transducteur piézoélectrique, éventuellement de type PZT.

Selon un aspect de l'invention, un important nombre de points de mesure est avantageusement utilisé en combinaison avec une mesure par corrélation du champ diffus, ce qui n'a jamais été fait avec des capteurs FBG, afin de réaliser de la tomographie.

Selon un mode de réalisation particulier de l'invention, la structure à examiner est "imagée". Cette imagerie permet des interprétations plus aisées que celles découlant de l'analyse des signaux bruts, puisque les singularités géométriques de la structure apparaissent sous une forme visuelle et ne sont pas confondues avec un défaut. Dans certains modes de réalisation, l'état de référence n'est alors plus nécessaire.

Les structures industrielles sont souvent très complexes géométriquement (du fait de raidisseurs, de rivets, de collages, ...) et par suite apparaissent une multitude d'échos ultrasonores. Une imagerie aide donc considérablement à l'interprétation des signaux.

Par ailleurs, une multiplicité de capteurs augmente la résolution de l'imagerie et renforce donc les avantages de l'invention.

Avantageusement, l'encombrement de l'appareillage selon l'invention reste limité, même avec de nombreux capteurs, ce qui permet une relative portabilité, compatibilité et utilité en regard des contraintes d'un système de contrôle de santé intégré de structures (*Structural Health Monitoring, SHM*)

Les mesures s'effectuent de façon passive, c'est-à-dire sans émission d'ondes acoustiques. Par suite, la consommation d'énergie est réduite et permet des solutions embarquées (par exemple à bord d'un avion, d'un bateau ou au fond de la mer).

La méthode produit une cartographie de la zone à contrôler facilement interprétable (ce qui limite les risques de fausses alarmes). La méthode est d'autant plus efficace que le champ acoustique est diffus, c'est-à-dire que des éléments géométriques diffractent de multiples fois le champ acoustique, ce qui est particulièrement vrai dans les structures industrielles qui ne sont jamais de simples plaques mais comportent par exemple des raidisseurs, des rivets ou encore des surépaisseurs locales qui diffractent les ondes et renforcent le caractère diffus du champ.

L'encombrement est réduit, compatible avec une intégration de l'appareillage dans les structures à surveiller. Par exemple, pour une intégration dans des matériaux composites, alors que l'utilisation de transducteurs piézoélectriques requiert en général deux fils électriques par transducteur piézoélectrique, une seule fibre optique intégrée entre les plis de composites comporte des dizaines de points de mesure. Le nombre de points d'entrée dans la structure est donc très limité ce qui limite d'autant plus les points de fragilisation potentiels.

Ainsi, l'invention trouvera application pour des opérations de contrôle de santé intégré de structures (*Structural Health Monitoring, SHM*), comme par exemple pour la détection (et la caractérisation) de corrosion sur fuselage d'avion, de délaminage dans des structures composites, de corrosion ou de dépôt dans des pipelines.

Les avantages liés aux modes de réalisation et à l'emploi de fibres optiques comprennent un faible encombrement, une masse réduite, une grande bande passante, un déport important, une immunité électromagnétique, une bonne résistance aux rayonnements sévères ou ionisants, entre autres.

**Description des figures**

Différents aspects et avantages de l'invention vont apparaitre en appui de la description d'un mode préféré d'implémentation de l'invention mais non limitatif, avec référence aux figures ci-dessous :

La figure 1 montre le schéma d'un exemple de dispositif selon l'invention;

La figure 2 illustre un autre exemple de configuration des points de mesure selon l'invention;

La figure 3 illustre un exemple de mesure d'amplitude en fonction de l'angle d'incidence sur un capteur;

La figure 4 illustre un exemple de configuration des capteurs FBG selon une forme dite "en rosette".

La figure 5 illustre un autre exemple de configuration de la fibre optique selon l'invention, disposée "en méandres";

La figure 6 illustre un exemple pour lequel des rayons acoustiques sont impactés par une zone corrodée;

La figure 7 illustre les trajets acoustiques possibles pour une configuration d'exemple à 16 capteurs disposés de façon circulaire.

**Description détaillée de l'invention**

L'invention peut avantageusement utiliser un grand nombre de points de mesure pour pouvoir faire de la tomographie par ondes guidées. Pour cela une ou plusieurs fibres optiques sur lesquelles sont gravés des réseaux de Bragg (FBG) sont intégrées dans (ou collées sur) la structure. Une seule fibre optique peut comporter des dizaines de FBG, et donc autant de points de mesure. L'encombrement est donc réduit.

Cependant les FBG ne peuvent fonctionner qu'en récepteur d'ondes guidées mais pas en émetteur. Les systèmes SHM actuels basés sur des FBG utilisent donc des transducteurs piézoélectriques en plus comme émetteur. Pour faire de la tomographie il faudrait un transducteur piézoélectrique par FBG, donc toujours un grand nombre de transducteurs piézoélectriques.

Selon un mode de réalisation de l'invention, est décrite une technique qui permet de fournir des images de structures de type industriel sur des zones localisées et/ou d'épaisseur limitée (géométrie de type plaque ou tube). Les images peuvent notamment indiquer les vitesses de propagation des ondes guidées. Selon certaines mises en œuvre de l'invention, cette fourniture d'images se fait de manière passive (i.e. sans émission d'ondes ultrasonores par le système embarqué).

La méthode comprend notamment :

- une mesure de champ ultrasonore de manière passive, par une technique de corrélation du champ diffus, technique issue de la géophysique, et récemment étudiée dans le cadre du contrôle santé intégré. Ce type de mesure n'a jamais été effectué avec des fibres optiques munies de réseaux de Bragg (FBG) comme capteurs. Or il se trouve que les réseaux de Bragg (FBG) permettent avantageusement d'avoir un nombre important de points de mesure.

- une imagerie de structure par tomographie réalisée par ondes guidées et qui exploite la présence de ce nombre important de points de mesure. Une telle imagerie est connue de l'état de la technique mais uniquement à l'aide de mesures « actives », c'està-dire de mesures nécessitant l'emploi d'émetteur d'ondes ultrasonores (pour des plaques ou pour des pipelines),

L'invention prévoit l'emploi de capteurs FBG, en lieu et place des transducteurs piézoélectriques habituellement utilisés dans les systèmes SHM.

Le passage de transducteurs piézoélectriques (par exemple de type PZT) à des capteurs (ou points de mesure) FBG n'est pas évident car ce sont deux technologies bien différentes et non-interchangeables. Les transducteurs piézoélectriques peuvent être utilisés à la fois comme émetteurs et comme récepteurs tandis que les FBG ne peuvent être utilisés uniquement que comme récepteurs. Par ailleurs les transducteurs piézoélectriques sont omnidirectionnels tandis que les FBG sont directionnels. Enfin les montages sont spécifiques dans les deux cas (électriques versus optiques). Les transducteurs piézoélectriques et les FBG sont souvent présentés comme complémentaires (transducteur piézoélectriques en émission et FBG en réception) et les systèmes SHM actuels basés sur des FBG utilisent tous des transducteurs piézoélectriques intégrés dans ou posés sur la structure avec la fibre optique comme émetteur d'ondes acoustiques.

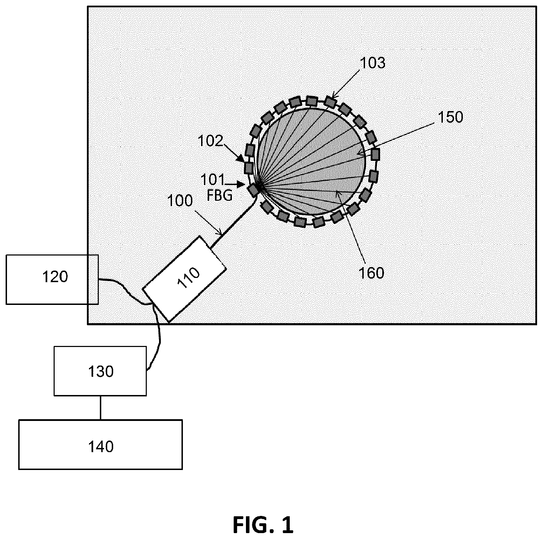

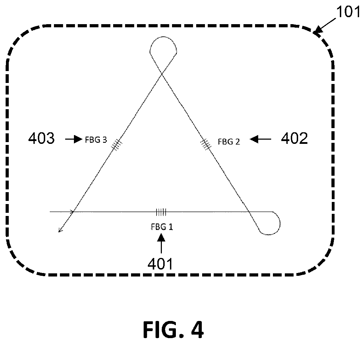

La figure 1 montre un schéma possible selon un exemple de réalisation du dispositif selon l'invention. Dans l'exemple, le dispositif est constitué d'une fibre optique 100 intégrée dans une structure à étudier (ou collée à sa surface) et qui comporte un certain nombre de réseaux de Bragg (*Fiber Bragg Grating,* FBG), comme par exemple le point de mesure FBG 101, ou encore FBG 102. Les points de mesure sont représentés par de petits rectangles. La figure 4 détaille une configuration possible d'un point de mesure par FBG (configuration dite "en rosette"). Une même fibre optique comprend généralement quelques dizaines de points de mesure FBG par fibre voire quelques centaines. La fibre optique est intégrée ou collée ou posée ou attachée ou associée à la structure

Selon un autre mode de réalisation de l'invention, plusieurs fibres optiques peut être utilisées. Dans ce cas, ces fibres sont interrogées séparément au moyen d'un multiplexeur.

La fibre optique 100 est couplée par un coupleur 110 à une source de lumière 120 (laser ou large bande), qui va émettre dans la fibre, et à un photo-détecteur ou un analyseur de spectre optique 130 qui va analyser la lumière réfléchie après son parcours dans la fibre optique, lui-même connecté à une unité de traitement numérique 140. Les différents parcours acoustiques dans la zone à inspecter 150 passant par le point de mesure FBG 101 et chacun des autres points de mesure est illustré par les chemins acoustiques 160.

Il existe au moins deux possibilités pour mesurer les ondes guidées en utilisant des points de mesure FBG. Un premier mode de réalisation utilise un laser dont on fait varier la longueur d'onde. Un second mode de réalisation utilise une source optique à large bande dont on détermine le spectre optique réfléchi. Le premier mode de réalisation présente l'avantage d'une sensibilité améliorée. Le second mode de réalisation présente l'avantage d'une économie de coût.

Selon des variantes de réalisation, le coupleur 110 peut être remplacé par un circulateur optique ("*circulator*" en anglais, non représenté) et l'analyseur de spectre (équipement onéreux) ou le photo-détecteur 130 par des FBG disposés sur des fibres optiques multiplexées (configuration parfois appelée *High-Speed Optical Wavelength Interrogation System*). D'autres systèmes pour la mise en oeuvre de fibres optiques multiplexées existent.

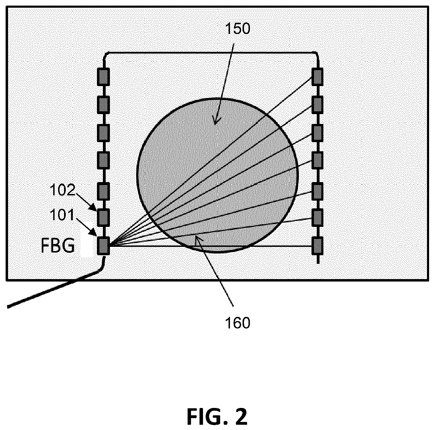

La figure 2 illustre un autre exemple de configuration des points de mesure selon l'invention. Les points de mesure FBG (101, 102, ...) peuvent être disposés de différentes manières tout autour de la zone à inspecter 150. La figure 2 illustre une autre configuration spatiale de la fibre optique 100 portant les FBG 101, 102 etc. Les différentes configurations en termes de disposition et de nombre de points de mesure n'ont pour limites que celles qui découlent des performances de reconstruction ultérieure, au moyen de l'algorithme de tomographie choisi pour le défaut que l'on souhaite étudier.

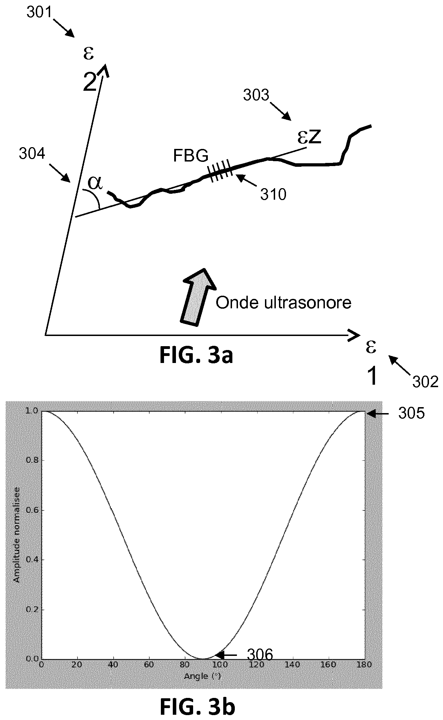

La figure 3 illustre un exemple de mesure d'amplitude en fonction de l'angle d'incidence sur un capteur. Les FBG en soi sont des capteurs directionnels : l'amplitude mesurée dépend de l'angle d'incidence de l'onde sur le capteur (figure 3a). La fibre 100 comprend un capteur FBG 310 orienté selon un angle alpha 304, exposé à une onde selon une direction 301 (de perpendiculaire 302) : l'amplitude est maximale (305) lorsque le FBG est dans le sens de propagation de l'onde et nulle ou minimale (306) lorsqu'il lui est orthogonal (figure 3b).

Les FBG étant gravés dans l'axe de la fibre optique, si la disposition présentée aux figures 1 et 2 correspondait à l'orientation réelle des FBG l'amplitude mesurée serait pratiquement nulle pour tous les couples de FBG d'intérêt, c'est-à-dire pour ceux dont le chemin acoustique traverse le cœur de la zone à inspecter. Dans un mode de réalisation particulier de l'invention, des capteurs pour fibre optique de type omnidirectionnel (par exemple de type "FOD" *Doppler effect-based fiber optic*) sont utilisés en complément de capteurs FBG). À titre d'exemple et de manière non revendiquée, lesdits capteurs pour fibre optique de type omnidirectionnels peuvent être utilisés en remplacement des capteurs FBG.

Dans un autre mode de réalisation, une configuration dite "en rosette" est utilisée, illustrée à la figure 4. La figure montre le détail de l'arrangement de chaque point de mesure, par exemple le point de mesure FBG 101, les différents points de mesure étant représentés par des rectangles aux figures 1 et 2. Chaque point de mesure comprend trois réseaux FBG disposés à 120° l'un de l'autre (FBG 1 401, FBG 2 402, FBG 3 403). Du fait de cette configuration spatiale, pour chaque couple de points de mesure la corrélation est effectuée entre les deux FBG (un pour chaque point de mesure) qui sont les mieux alignés.

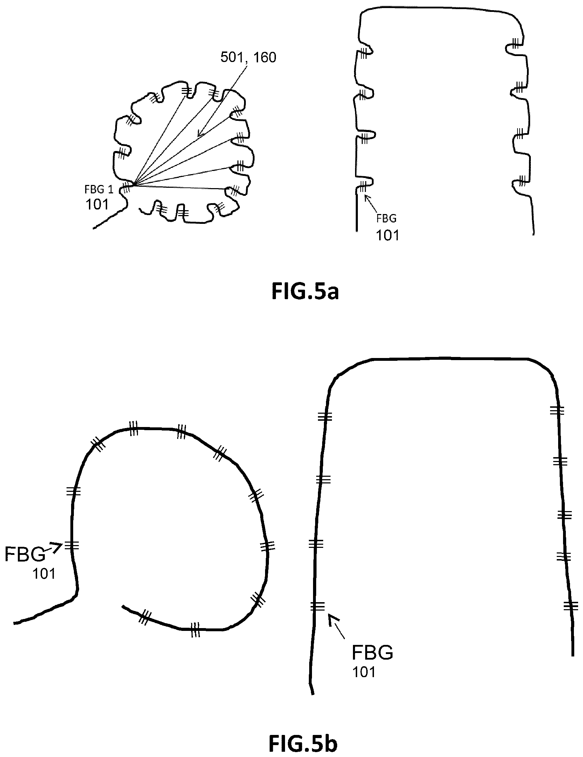

Selon une variante illustrée à la figure 5a, la fibre optique 100 peut-être disposée selon des "méandres". Dans cette configuration, moins de trajets sont alors disponibles pour la tomographie (seuls sont utilisables ceux pour lesquels les FBG sont relativement bien alignés, sur la figure les trajets marqués 501).

Pour chaque couple (A, B) de points de mesure de ce réseau on effectue une corrélation du champ acoustique u mesuré simultanément sur une longue période en A et en B, par exemple en appliquant (il existe d'autres possibilités de calcul) :

$$C_{AB}(t) = \int u_A(t + \tau).u_B(\tau)d\tau.$$

Il est établi que la corrélation (en toute rigueur sa dérivée) converge vers la fonction de Green entre A et B si les différentes composantes du champ d'ondes respectent la condition d'équi-répartition en énergie (la répartition en phase et en amplitude des ondes est aléatoire, hypothèse dite de « champ diffus »). La fonction de Green entre A et B est l'enregistrement que l'on obtiendrait en A si une source émettait un Dirac en B.

Les conditions d'équi-répartition en énergie peuvent être obtenues lorsque les sources sont réparties aléatoirement dans le milieu ou lorsque le nombre et la répartition des sources est limité mais le milieu est très diffusant. Des démonstrations expérimentales ont montré que la convergence était obtenue dans des gammes de fréquences intéressantes pour le SHM (soit du kilohertz à quelques mégahertz).

Par exemple, les sources de bruit naturelles dans les structures industrielles peuvent être celles associées à la couche limite turbulente en aéronautique, l'impact de vagues, les vibrations induites par les moteurs sur un bateau ou un écoulement turbulent dans un tube.

Selon une variante illustrée à la figure 5b, la fibre optique peut être disposée sans méandres particuliers (ce qui peut être plus facile ou faisable dans certaines situations). Un moyen de remédier à cette géométrie relativement défavorable consiste à procéder à de la corrélation de coda de corrélations ce qui revient à passer, pour chaque couple (A, B) de points de mesure, par au moins un troisième point de mesure C, et à faire les corrélations $C_{AC}$ et $C_{BC}$ puis la corrélation de la coda de ces deux signaux pour obtenir $C_{AB}$, cette étape pouvant par ailleurs être répétée pour tous les points de mesure C différents de A et B puis moyennée afin d'améliorer le rapport signal sur bruit. Cette mise en œuvre requiert une disposition simplifiée de la fibre, qui ne nécessite plus de méandres de la fibre pour aligner au mieux les FBG les uns par rapport aux autres (figure 5b). En contrepartie le temps de traitement des signaux est plus long. Dans la pratique cela se fait de la manière suivante : pour le couple considéré (A, B) on utilise un autre point de mesure $C_i$ parmi l'ensemble des points disponibles. On corrèle dans un premier temps les signaux mesurés entre A et B d'une part et $C_i$ d'autre part. Une fois les corrélations $C_iA$ et $C_iB$ effectuées, on corrèle la coda de ces signaux pour obtenir la corrélation entre A et B. Ceci pouvant être répété sur une partie ou l'ensemble des points de mesure $C_i$, on peut sommer l'ensemble des corrélations obtenues pour obtenir une meilleure estimation de la fonction de Green entre A et B.

De la fonction de Green obtenue par la corrélation on déduit la mesure du temps de vol entre A et B. Répétée pour tous les couples de récepteurs possibles, cette opération fournit un grand nombre de données en temps de vol que l'on peut exploiter pour effectuer une reconstruction par tomographie en vitesse de propagation.

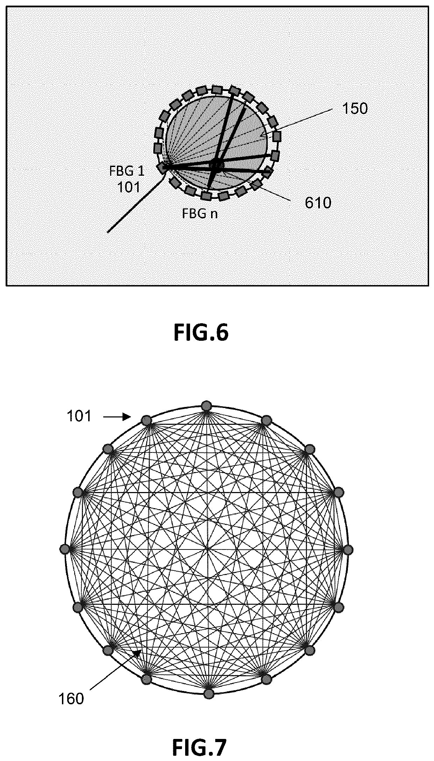

La figure 6 illustre un exemple pour lequel les rayons acoustiques sont impactés par une zone corrodée 610 sur une zone d'étude 150. Dans l'exemple, certains rayons acoustiques passant par les points de mesure FBG 1 101 (généralement FBG n) sont impactés. Parmi tous les trajets possibles, seuls ceux passant par la zone corrodée 610 (ou un autre endommagement tel un délaminage) sont impactés (ou affectés, confer les lignes pleines sur l'illustration), les autres trajets sont inchangés (lignes en pointillés)

La méthode de tomographie selon l'invention inverse l'ensemble des temps de vol mesurés, afin de reconstruire une carte de vitesses de propagation compatibles avec tous les temps de vols. Pour les ondes guidées, la vitesse de propagation dépendant de l'épaisseur de la structure (par une relation connue, i.e. les courbes de dispersion), cette carte de vitesse de propagation est transposable en une carte d'épaisseur si l'on cherche à détecter de la corrosion. Cette méthode fonctionne aussi, par exemple, pour détecter le délaminage d'une structure composite (puisqu'au niveau du délaminage la vitesse des ondes guidées est également modifiée).

La carte que l'on obtient est une image de la structure. Cette image est interprétable : l'étendue de la zone endommagée est rendue visible. Pour un dommage de corrosion, par exemple, il devient donc possible de connaître l'étendue et l'épaisseur résiduelle. Par suite, la gravité du dommage peut être évaluée, afin le cas échéant de prendre des mesures correctives.

L'obtention d'une image de la structure permet donc de détecter un ou plusieurs défauts, sans avoir besoin de soustraire le signal mesuré à un instant $t$ à celui mesuré à un instant $t_0$, état de référence pour lequel on considère que la structure est saine. La fourniture préalable de cet état de référence implique de nombreuses contraintes (par exemple, nécessité de construire une base de données avec des mesures à toutes les températures qu'aurait à subir la structure, problèmes en cas de vieillissement des capteurs entraînant de fausses alarmes, etc.)

La figure 7 illustre les trajets acoustiques possibles pour une configuration d'exemple à 16 capteurs (de type 101) disposés de façon circulaire. La robustesse de la méthode présentée ici vient du nombre de points de mesure et donc du nombre de trajets possibles. La figure 7 présente la multiplicité des trajets acoustiques 160 dans le cas de l'emploi de 16 capteurs ou points de mesures. Il est possible d'utiliser des centaines de capteurs.

Différents modes de réalisation sont possibles pour mettre en œuvre la tomographie, en particulier quant à l'étalonnage de la méthode. La tomographie suppose en effet de connaître avec précision la position des FBG.

Selon un mode de réalisation, il est procédé à la mesure des positions individuelles des points de mesure FBG.

Selon un autre mode de réalisation, un étalonnage est effectué juste après la pose de la fibre, à une température contrôlée, afin de mesurer les temps de vols entre chacun des couples de FBG. Si la vitesse est connue, ce qui n'est pas toujours le cas, il est possible de déduire la position des FBG avec une très bonne précision. A défaut, il est possible de mesurer le temps de vol pour chacun des couples de capteurs et de faire une cartographie de variation de la vitesse de propagation par rapport à l'état initial. Connaissant la température au moment de l'étalonnage, si on connait la température de la structure à l'aide d'un thermocouple intégré à l'instant $t$ on peut, en outre, compenser la variation de temps de vol induite par la température. A défaut, la température implique généralement un effet uniforme (quoique potentiellement anisotrope) alors qu'un défaut aura généralement un effet localisé. Les problèmes mentionnés précédemment sur le fait de soustraire l'état de référence sont donc moins critiques que dans les techniques actuelles et surtout sont compensés par un nombre important de points de mesure.

Selon un autre mode de réalisation, il est procédé à une cartographie de la structure à un état sain (état de référence de la structure). Dans ce cas, il n'est pas besoin de soustraction des signaux. Cette cartographie à l'état sain fournit une image qui permet d'identifier certaines particularités géométriques (telles que rivets par exemple) au sein de la zone à contrôler afin de ne pas les identifier comme des défauts lors des cartographies suivantes.

Selon une variante entièrement optionnelle, une tomographie en atténuation est réalisée. La corrélation permet de reconstruire non seulement la phase de la fonction de Green mais également son amplitude. Une tomographie en atténuation peut alors être effectuée. La convergence de la corrélation sera différente et la directivité des FBG pourra être compensée. Cette configuration est avantageuse dans certaines situations, en particulier lorsque le défaut que l'on cherche à étudier influe peu sur la vitesse de propagation des ondes ultrasonores.

Selon un développement de l'invention, la corrélation entre deux FBG situés sur une même fibre peut être effectuée. Selon un autre développement, plusieurs fibres optiques sont utilisées, avec corrélation entre deux FBG différents situés sur des fibres différentes.

La présente invention peut s'implémenter à partir d'éléments matériel et/ou logiciel. Elle peut être disponible en tant que produit programme d'ordinateur sur un support lisible par ordinateur. Le support peut être électronique, magnétique, optique ou électromagnétique.

## Revendications

1. Méthode d'analyse d'une structure par corrélation de champ acousto-élastique diffus, une fibre optique comportant une pluralité de points de mesure, un point de mesure comportant un ou plusieurs capteurs de type réseau de Bragg, la fibre optique étant déployée dans ou sur la structure à analyser, la méthode comprenant les étapes consistant à :

   - émettre de la lumière dans la fibre optique;
   - interroger de manière sensiblement simultanée au moins une partie de couples de capteurs de type réseau de Bragg mesurant au cours du temps les ondes acousto-élastiques au niveau des points de mesure;
   - déterminer par corrélation des signaux acousto-élastiques, pour au moins une partie des couples de capteurs de type réseau de Bragg, la fonction de Green de la structure.

2. Méthode selon la revendication 1, comprenant en outre une étape de reconstruction des vitesses de propagation des ondes acousto-élastiques par tomographie, l'imagerie étant réalisée par l'inversion de l'ensemble des temps de vols entre les capteurs de type réseau de Bragg, chaque temps de vol pour chaque couple de capteurs de type réseau de Bragg étant déduit de la mesure de corrélation.

3. Méthode selon la revendication 2, pour laquelle la position dans l'espace de chaque point de mesure est préalablement et individuellement mesurée.

4. Méthode selon la revendication 2, pour laquelle la température de la structure est mesurée et une variation de temps de vol induite par un changement de température est compensée.

5. Méthode selon la revendication 2, comprenant une première mesure effectuée dans un état initial ou de référence de la structure et comprenant une imagerie de la structure réalisée par tomographie à partir de ladite première mesure permettant d'identifier certaines particularités géométriques de la structure.

6. Méthode selon la revendication 5, comprenant en outre une seconde mesure effectuée dans un état ultérieur pour les mêmes couples de points de mesure que la première mesure et comprenant en outre une cartographie par tomographie des variations de vitesses de propagation dans la structure entre l'état initial et l'état ultérieur obtenue à partir des différences des temps de vols mesurés entre les deux états.

7. Méthode selon l'une quelconque des revendications précédentes pour laquelle un point de mesure comprend un capteur de type réseau de Bragg.

8. Méthode selon l'une quelconque des revendications précédentes pour laquelle un point de mesure comprend trois capteurs de type réseau de Bragg récepteurs et directionnels sensiblement disposés à 120° l'un de l'autre dans une configuration en rosette.

9. Méthode selon la revendication 1, la mesure par corrélation comprenant une corrélation de coda de corrélations entre capteurs de type réseau de Bragg.

10. Méthode selon l'une quelconque des revendications précédentes comportant une pluralité de fibres optiques selon la revendication 1, chaque capteur de type réseau de Bragg pouvant être interrogé séparément.

11. Système pour l'analyse d'une structure par corrélation de champ acousto-élastique diffus, comprenant :

- au moins une fibre optique comportant une pluralité de points de mesure, un point de mesure comportant un ou plusieurs capteurs de type réseau de Bragg, lesdits capteurs de type réseau de Bragg étant configurés pour mesurer au cours du temps des ondes acousto-élastiques au niveau des points de mesure;
- une source de lumière couplée à la fibre optique;
- un photo-détecteur ou un analyseur de spectre optique pour analyser la lumière réfléchie après son parcours dans la fibre optique;
- des moyens de traitement du signal pour effectuer des calculs de corrélation du champ acousto-élastique et de tomographie, les moyens de traitement du signal étant configurées pour déterminer par corrélation des signaux acousto-élastiques pour au moins une partie des couples de capteurs de type réseau de Bragg, une fonction de Green de la structure.

12. Système selon la revendication précédente, pour laquelle la source de lumière est un laser dont on fait varier la longueur d'onde ou une source optique à large bande dont le spectre optique réfléchi est déterminé.

13. Système comprenant une pluralité de fibres optiques selon l'une quelconque des deux revendications précédentes, les fibres optiques étant multiplexées au moyen d'au moins un circulateur optique et/ou un analyseur de spectre et/ou un multiplexeur.

14. Système selon l'une quelconque des revendications 11 à 13 pour lequel un ou plusieurs capteurs unidirectionnels de type réseau de Bragg sont complémentés par un ou plusieurs capteurs omnidirectionnels.

15. Système selon l'une quelconque des revendications 11 à 14, comprenant en outre une ou plusieurs sources de bruit actives positionnées dans ou sur la structure de manière à obtenir un champ acoustoélastique diffus.

16. Système selon la revendication précédente, au moins une source de bruit active étant un transducteur piézoélectrique.

**Patentansprüche**

1. Verfahren zum Analysieren einer Struktur durch Korrelation des diffusen akusto-elastischen Feldes, wobei eine optische Faser mehrere Messpunkte aufweist, wobei ein Messpunkt einen oder mehrere Sensoren des Bragg-Gittertyps umfasst, wobei die optische Faser in oder auf der zu analysierenden Struktur platziert wird, wobei das Verfahren die folgenden Schritte beinhaltet:

- Emittieren von Licht durch die optische Faser;
- im Wesentlichen gleichzeitiges Abfragen wenigstens einiger der Sensorpaare des Bragg-Gittertyps unter Messung der akusto-elastischen Wellen an den Messpunkten über die Zeit;

- Bestimmen, durch Korrelation der akusto-elastischen Signale, der Green-Funktion der Struktur für wenigstens einige der Sensorpaare des Bragg-Gittertyps.

2. Verfahren nach Anspruch 1, das ferner einen Schritt des Rekonstruierens der Ausbreitungsgeschwindigkeiten der akusto-elastischen Wellen durch Tomographie beinhaltet, wobei die Bildgebung durch Umkehren aller Flugzeiten zwischen den Sensoren des Bragg-Gittertyps erzielt wird, wobei jede Flugzeit für jedes Sensorpaar des Bragg-Gittertyps vom Korrelationsmesswert abgeleitet wird.

3. Verfahren nach Anspruch 2, für das die Position jedes Messpunkts im Raum zuvor und individuell gemessen wird.

4. Verfahren nach Anspruch 2, bei dem die Temperatur der Struktur gemessen und eine durch eine Temperaturänderung verursachte Flugzeitvariation kompensiert wird.

5. Verfahren nach Anspruch 2, das eine erste Messung beinhaltet, die in einem Anfangs- oder Referenzzustand der Struktur durchgeführt wird und eine durch Tomographie durchgeführte Bildgebung der Struktur auf der Basis der ersten Messung beinhaltet, so dass bestimmte geometrische Eigenschaften der Struktur identifiziert werden können.

6. Verfahren nach Anspruch 5, das ferner eine zweite Messung beinhaltet, durchgeführt in einem späteren Zustand für dieselben Messpunktpaare wie die erste Messung, und ferner eine durch Tomographie durchgeführte Kartographie der Ausbreitungsgeschwindigkeitsvariationen in der Struktur zwischen dem Anfangszustand und dem späteren Zustand beinhaltet, erhalten auf der Basis der Differenzen der zwischen den beiden Zuständen gemessenen Flugzeiten.

7. Verfahren nach einem der vorherigen Ansprüche, bei dem ein Messpunkt einen Sensor des Bragg-Gittertyps umfasst.

8. Verfahren nach einem der vorherigen Ansprüche, bei dem ein Messpunkt drei Empfänger- und Richtungssensoren des Bragg-Gittertyps umfasst, die im Wesentlichen in einem Winkel von 120° zueinander in einer Rosettenkonfiguration angeordnet sind.

9. Verfahren nach Anspruch 1, wobei die Messung durch Korrelation eine Coda-Korrelation von Korrelationen zwischen Sensoren des Bragg-Gittertyps beinhaltet.

10. Verfahren nach einem der vorherigen Ansprüche, das mehrere optische Fasern nach Anspruch 1 umfasst, wobei jeder Sensor des Bragg-Gittertyps separat abgefragt werden kann.

11. System zum Analysieren einer Struktur durch Korrelation eines diffusen akusto-elastischen Feldes, das Folgendes umfasst:

- wenigstens eine optische Faser, die mehrere Messpunkte umfasst, wobei ein Messpunkt einen oder mehrere Sensoren des Bragg-Gittertyps umfasst, wobei die Sensoren des Bragg-Gittertyps zum Messen der akusto-elastischen Wellen an den Messpunkten über die Zeit konfiguriert sind;
- eine Lichtquelle, die mit der optischen Faser gekoppelt ist;
- einen Fotodetektor oder optischen Spektrumsanalysator zum Analysieren des nach dem Durchlaufen der optischen Faser reflektierten Lichts;
- Mittel zum Verarbeiten des Signals zum Durchführen von Berechnungen der Korrelation des akusto-elastischen Feldes und der Tomographie, wobei die Mittel zum Verarbeiten des Signals zum Bestimmen einer Green-Funktion der Struktur durch Korrelation der akusto-elastischen Signale für wenigstens einige der Sensorpaare des Bragg-Gittertyps konfiguriert sind.

12. System nach dem vorherigen Anspruch, bei dem die Lichtquelle ein Laser, dessen Wellenlänge variiert wird, oder eine optische Breitbandquelle ist, deren reflektiertes optisches Spektrum bestimmt wird.

13. System, das mehrere optische Fasern nach einem der beiden vorherigen Ansprüche umfasst, wobei die optischen Fasern mittels wenigstens eines optischen Zirkulators und/oder eines Spektrumsanalysators und/oder eines Multiplexers gemultiplext werden.

14. System nach einem der Ansprüche 11 bis 13, bei dem ein oder mehrere unidirektionale Sensoren des Bragg-Gittertyps durch einen oder mehrere omnidirektionale Sensoren ergänzt werden.

15. System nach einem der Ansprüche 11 bis 14, das ferner eine oder mehrere aktive Rauschquellen umfasst, die in oder auf der Struktur positioniert sind, um ein diffuses akusto-elastisches Feld zu erhalten.

16. System nach dem vorherigen Anspruch, wobei wenigstens eine aktive Rauschquelle ein piezoelektrischer Wandler ist.

**Claims**

1. A method for analyzing a structure by diffuse acousto-elastic field correlation, an optical fiber comprising a plurality of measurement points, a measurement point comprising one or more sensors of fiber Bragg grating FBG type, the optical fiber being deployed in or on the structure to be analyzed, the method comprising:

   - the emission of light into the optical fiber;
   - the interrogation, substantially simultaneously, at least part of pairs of FBG sensors measuring, over time, the acousto-elastic waves at the measurement points;
   - the determination, by correlation of the acousto-elastic signals, for at least part of the pairs of sensors of fiber Bragg grating FBG type, of the Green's function of the structure.

2. The method as claimed in claim 1 further comprising a step of reconstruction of the velocities of propagation of the acousto-elastic waves by tomography, the imaging being performed by the reversal of all the times of flight between the FBG sensors, each time of flight for each pair of FBG sensors being deduced from the correlation measurement.

3. The method as claimed in claim 2, for which the position in space of each measurement point is previously and individually measured.

4. The method as claimed in claim 2, for which the temperature of the structure is measured and a variation of time of flight induced by a change of temperature is compensated.

5. The method as claimed in claim 2, comprising a first measurement performed in an initial or reference state of the structure and comprising an imaging of the structure performed by tomography from said first measurement making it possible to identify certain geometrical peculiarities of the structure.

6. The method as claimed in claim 5, further comprising a second measurement performed in a subsequent state for the same pairs of measurement points as the first measurement and further comprising a mapping by tomography of the variations of the velocities of propagation in the structure between the initial state and the subsequent state obtained from the differences in times of flight measured between the two states.

7. The method as claimed in any one of the preceding claims, for which a measurement point comprises an FBG sensor.

8. The method as claimed in any one of the preceding claims, for which a measurement point comprises three receiving and directional FBG sensors substantially arranged at 120° to one another in a rosette configuration.

9. The method as claimed in claim 1, the measurement by correlation comprising a coda correlation of correlations between FBG sensors.

10. The method as claimed in any one of the preceding claims, comprising a plurality of optical fibers as claimed in claim 1, each FBG sensor being able to be interrogated separately.

11. A system for analyzing a structure by correlation of diffuse acousto-elastic field, comprising:

    - at least one optical fiber comprising a plurality of measurement points, a measurement point comprising one or more sensors of fiber Bragg grating FBG type, said sensors of fiber Bragg grating FBG type being configured to measure, over time, acousto-elastic waves at the measurement points;
    - a light source coupled to the optical fiber;
    - a photo detector or an optical spectrum analyzer to analyze the reflected light at the end of its path in the optical fiber;
    - signal processing means for performing acousto-elastic field correlation and tomography computations, the signal processing means being configured to determine, by correlation acousto-elastic signals for at least part of the pairs of sensors of fiber Bragg grating FBG type, a green function of the structure.

12. The system as claimed in the preceding claim, for which the light source is a laser whose wavelength is varied or a wide band optical source whose reflected optical spectrum is determined.

13. A system comprising a plurality of optical fibers as claimed in any one of the preceding claims, the optical fibers being multiplexed by means of at least one optical circulator and/or one spectrum analyzer and/or one multiplexer.

14. The system as claimed in any one of claims 11 to 13, for which one or more unidirectional sensors of FBG type are complemented by one or more omnidirectional sensors.

15. The system as claimed in any one of claims 11 to 14, further comprising one or more active noise sources positioned in or on the structure so as to obtain a diffuse acousto-elastic field.

16. The system as claimed in the preceding claim, at least one active noise source being a piezoelectric transducer.

**FIG. 1**

14

**FIG. 2**

**FIG. 3a**

**FIG. 3b**

**FIG. 4**

**FIG.5a**

**FIG.5b**

**FIG.6**

**FIG.7**

**EP 3 077 795 B1**

## RÉFÉRENCES CITÉES DANS LA DESCRIPTION

### Documents brevets cités dans la description

- US 6285806 B